# EUROPEAN PATENT SPECIFICATION

(11) **EP 2 013 491 B1**
(45) Date of publication and mention of the grant of the patent: **02.11.2011**
(21) Application number: 06824330.2
(22) Date of filing: 09.11.2006
(51) Int. Cl.: F16B 23/00, B25B 15/00, B21K 1/46

(54) **SCREW HEAD AND TOOL FOR USE THEREWITH**
SCHRAUBENKOPF UND WERKZEUG ZUR VERWENDUNG DAMIT
TETE DE VIS ET OUTIL A UTILISER AVEC CELLE-CI

(30) Priority: 24.04.2006 GB 0608062
(43) Date of publication of application: 14.01.2009
(73) Proprietor: TTAPDRIVE AS, 4637 Kristiansand (NO)
(72) Inventor: EDLAND, Jone, N-0757 Oslo (NO)
(74) Representative: Onsagers AS
(86) International application number: PCT/NO2006/000402
(87) International publication number: WO 2007/123409

(56) References cited:
- EP-A1- 1 039 151
- DE-A1- 19 836 572
- US-A- 4 084 478
- US-B1- 6 951 158

## Description

### Technical field of the Invention

The invention relates in general to a system for driving a screw having a hexalobular screw head, and to a corresponding tool for use therewith, and to a screw for use in that system. In particular, the invention relates to a system enabling a sufficient "interference fit" between the tool and the screw.

### Background to the invention

The background to this technology is described in our U.S. Patent specification No. 6,951,158, (which is owned by the assignee of the present application), and will not be repeated here. U.S. Patent specification No. 6,951,158 shows a tool to engage a screw head. This configuration had advantages in that it restricted the screw from wobbling, and prevented the driving bit from camming out of the screw recess. However, the tool and screw head could not interact satisfactory so that the screw had an adequate 'interference fit', enabling the screw to stay fitted on the tool without falling off. For screws of carbon steel it is known to hold the bit inserted in a magnetic holder as a support; however, this is not a stable and satisfactory solution for many professional users.

Moreover, it could not enable a "stick-fit" on non-magnetic materials such as for Titanium (which is widely used for screws used in human bones) and Stainless steel screws used in building construction. The proposed system enables a stable interference fit on all recess-screw applications.

This proposed system has advantages when inserting loose screws in general and especially when it is only possible to insert a screw by one-handed operation without the possibility of using a magnet holder. The design of this interference fit shape enables the recess to retain the screw on the tool, without it falling off. Moreover, the press connection enables the screws to "stick-fit" when made of non-magnetic material such as Titanium, and also Stainless Steel which is a dominant material for several screw applications.

The term "stick-fit" is well described in U.S. Patent specification No. 4,084,478, column 2 lines 1 to 29, related to cross-recess screws. However, that specification describes a different kind of "stick-fit" challenge because cross-recess is conical and therefore has an upward connection while being inserted. Hence, the stick fit must be stronger if it is to enable the screw to have satisfactory torque stability when the screw is inserted on a tool for installation.

The interference fit solution of the present proposal is sophisticated because the user can influence how firm the stick fit should be - depending on the needs for specific applications. Interference fit should be tight, but not too tight. The conical press connection of this proposal enables the user to decide the strength of the stick fit which is particularly important for screws of softer materials such as copper, and others such as plastic, aluminium and titanium.

US 4,269,246 shows "a fastener having a recessed drive socket which is multilobular in cross-section", which is similar to the first recess described in US 6,951,158 forming the background to this invention.

In US 4,269,246 the driver bit is "tapered axially, converging toward the tip end of the head portion". However, due to high degree of taper (2 ½ - 3 ½ DEG), the recess cannot be as deep as is often needed to prevent wobbling. Further, this specification indicates that the tapered bit must have vertical mounting in order to attain a greater degree of engagement. However, for manual operations, and particularly one hand-operations, it will wobble and be unstable to insert screws.

Another advantage of the new proposal is the conical press connection that also absorbs tolerances, so enabling a stable "stick-fit" solution. Stable "stick-fit" is difficult to obtain because of variations within manufacturing tolerances and because drivers and recess-forming punches wear out gradually. However, our solution enables functional quality in large-scale production, and because conical press connection has wider tolerances it enables cost-effective large scale production because it enables longer tool-life without comprising the "stick-fit" on the final screw.

In the prior art, the tool engaged the screw head within a hexalobular slot with surfaces that were directly parallel to each other.

### Disclosure of the invention

The invention provides a system for driving a screw, comprising a screw and a corresponding tool, the screw head having a hexalobular slot in the upper surface of the screw head, an upper peripheral wall of hexalobular planform extending down into the screw head, the upper peripheral wall being parallel or near parallel to the axis of the screw, a sloping transition surface extending downwardly and inwardly with respect to the lower edge of the upper peripheral wall, and a tapered recess extending downwardly from the lower edge of the sloping transition surface, in which the dimensions of the screw head are such that when the screw head is engaged by a tool having upper and lower engagement sections, and in which the upper engagement section is tapered downwardly at an angle with respect to the axis of the screw to which the tool is to engage and the lower engagement section is tapered downwardly, so that there is a 'stick fit' between the surface of the tapered recess and the external surface of the lower tapered engagement section, and there is no engagement with the sloping transition surface.

The upper engagement section may be tapered at an angle of between 0,1 to 2,5 degrees, and more preferably between 0,5 and 1,5 degrees.

It is preferred that in the lower engagement section of the tool, the tool is tapered at the same angle as the recess in the screw, so that the tool can make a 'stick fit' press connection with the screw.

It is further preferred that there is a transition zone between the upper and lower engagement sections of the tool in which the tool makes no contact with the screw.

It is still further preferred that in the upper engagement section of the tool, the tool is tapered at a slightly sharper angle than a peripheral wall of the screw.

Preferably the tapered recess is of circular planform.

It is further preferred that there is a closer fit at the upper edge of the upper peripheral wall and a looser fit at the lower edge of the upper peripheral wall with the upper engagement section. This upper engagement section is only to stabilize and support the lower tapered portion. Thus the upper engagement section is not tapered too much. This avoids stick fit in that section, so that stick fit only occurs between the lower tapered engagement section and the tapered recess.

The invention also provides a tool for use as part of the system described above.

The invention also provides a screw for use as part of the system described above.

The invention also provides header tooling for use in making a tool as part of the system described above.

### Brief description of the drawings

A specific embodiment of the invention will now be described by way of example with reference to the accompanying drawings, in which:-
Figure 1 is a cross section of a driving tool,
Figure 2 is a cross section of that tool engaging the head of a screw, and
Figure 3 is a plan view of the screw head showing the configuration of a slot.

### Description of a specific embodiment.

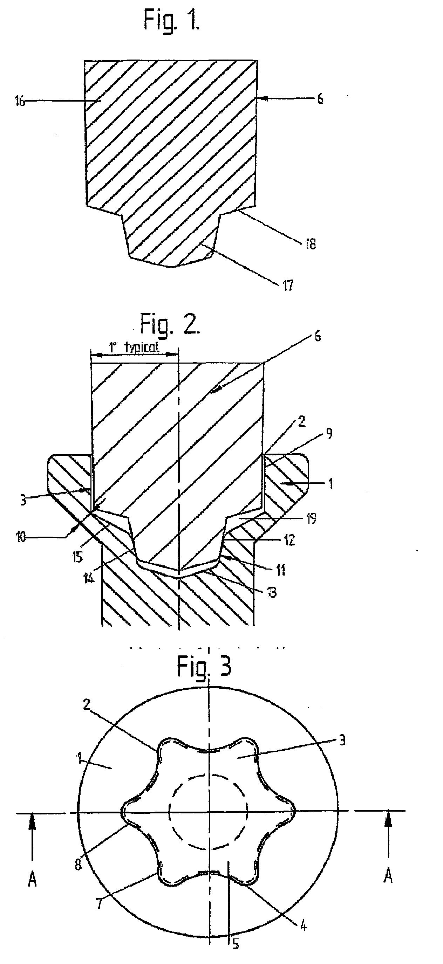

As shown in Figure 2, a screw head 1 has a slot 2. The slot 2 is formed as a recess 3 in the screw head, and is shaped as a star with six points 4. The points 4 of the star are rounded, as shown in Figure 3, and the slot 2 is termed a hexalobular slot. Hexalobular slots are described in ISO 10664, and are an internal driving feature. They may be known as 'teeth recesses' or 'star recesses'. Depending on the direction of rotation, a tool 6 (see Figures 1 and 2) will engage surfaces 7 or 8 on one side or the other of each point 4.

Figure 2 shows a cross section through the screw head 1. The recess 3 extends down into the screw head 1. Walls 9 of the recess 3 are approximately staight. The cross section of the recess 3 retains the shape of a star with six points throughout the straight walled part as it extends down into the screw head. The depth of the recess 3 is limited by the minimum allowable wall thickness 10 near the bottom of the recess 3.

The slot 2 has a further recess 11 at the bottom of the six pointed recess 3. The recess 11 is aligned with the axis of the screw, and so is centrally located therein. This central recess 11 has a circular cross section and a smaller diameter than the recess 3. Walls 12 of the recess 11 are slightly inclined, so that the bottom 13 of the recess 11 has a diameter slightly smaller than that of the upper part 14 of the recess 11.

A downwardly straight or sloping transition surface 15 is formed between the upper part 14 of the central recess 11 and the walls 9 of the six-pointed recess 3.

The tool 6 has an engagement section 16 that is designed to fit within the recess 3. The shape of the engagement section 16 in plan complements the shape of the recess 3. However, the diameter of the engagement section 16 may be uniform or slightly tapered inwardly towards its lower end. The taper may typically be 0,5-1,5 degrees. The diameter of the engagement section 16 is sized to allow it to be inserted into the recess 3 without difficulties.

The tool 6 also has a central point 17 with a circular cross section. The diameter of the central point 17 is slightly larger than that of the recess 11. A surface 18 on the tool 6 extends outwardly and upwardly from the central point 17 to the engagement section 16. The angle of inclination of the surface 18 is smaller than that of the transition surface 15. Thus a space 19 is formed between the surfaces 15 and 18 when a tool 6 is inserted into the slot 2. The depth of the space 19 diverges towards the central point 17. The section 16 of the tool 6 may nearly engage the upper periphery of the walls 9 of the recess 3 when the tool enters the slot 2. Furthermore, in the case of screws which have undergone surface treatment, the diverging space 19 allows any excess coating to collect in the space 19 without obstructing the engagement between the tool and the slot. If no space had been provided, coating residue might settle on the surface 15 and at the bottom 13 of the recess 11, and thereby prevent sufficient engagement between the tool 6 and the slot 2.

Press engagement between the central point 17 and the recess 11, supported by the engagement section 16 of the tool and the upper periphery of the wall 9, ensures that - due to friction - the screw can remain (i.e. 'stick fit') on the tool without falling off. This mode of engagement is particularly effective in reducing angular movement between the tool 6 and the screw head 1. Retention of the screw on the tool by press engagement is particularly useful on one handed operation for both power tools and regular hand tools, and especially for screws made of non-magnetic material such as titanium, stainless steel and others.

The central point 17 may have a length shorter than the height of the recess 3, to enable the engagement section 16 of the tool 6 to enter the recess 3.

### Advantages

The formation of a press connection between the lower part 17 of the tool and the bottom part 11 of the screw head enables the screw to remain on the tool, and not fall off. This advantage is in addition to the feature of our U.S. Patent specification No. 6,951,158 that restricted 'wobbling' of the screw. The force fit connection on the tool 6 and the screw head 1 keeps the screw head on the tool, including on non-magnetic materials such as Titanium (widely used for screws used in human bones) and Stainless steel screws used in building construction. The design enables a stable interference fit on all recess-screw applications.

## Claims

1. A system for driving a screw, comprising a screw and a corresponding tool, the screw head having a hexalobular slot (2) in the upper surface of the screw head, an upper peripheral wall (9) of hexalobular planform extending down into the screw head, the upper peripheral wall (9) being parallel or near parallel to the axis of the screw, a sloping transition surface (15) extending downwardly and inwardly with respect to the lower edge of the upper peripheral wall (9), and a tapered recess (11) extending downwardly from the lower edge of the sloping transition surface (15), in which the dimensions of the screw head are such that when the screw head is engaged by a tool (6) having upper (16) and lower (17) engagement sections, and in which the upper engagement section (16) is designed to fit within a recess (3) formed in the hexalobular slot (2) and the lower engagement section (17) is tapered downwardly, there is a 'stick fit' between the surface of the tapered recess (11) and the external surface of the lower tapered engagement section (17), and there is no engagement with the sloping transition surface (15).

2. The system of claim 1, wherein the upper engagement section (16) comprises a uniform diameter.

3. The system of claim 1, wherein the upper engagement section (16) is tapered downwardly at an angle with respect to the axis of the screw to which the tool is to engage.

4. The system of claim 3, in which the upper engagement section (16) is tapered at an angle of 0,1 to 2,5 degrees.

5. The system of claims 3 or 4, in which the upper engagement section (16) is tapered at an angle of between 0,5 and 1,5 degrees.

6. The system of any one of the preceding claims, in which in the lower engagement section (17) of the tool, the tool is tapered at the same angle as the recess (11) in the screw, so that the tool can make a 'stick fit' press connection with the screw.

7. The system of 6, in which there is a transition zone (19) between the upper and lower engagement sections of the tool in which the tool makes no contact with the screw.

8. The system of claim 6 or claim 7, in which in the upper engagement section (16) of the tool, the tool (6) is tapered at a slightly sharper angle than a peripheral wall (9) of the screw.

9. The system of any one of the preceding claims, in which the tapered recess 11 is of circular planform.

10. The system of claim 9, in which there is a closer fit at the upper edge of the upper peripheral wall and a looser fit at the lower edge of the upper peripheral wall (9) with the upper engagement section (16).

11. Tool for use as part of the system according to any one of the preceding claims.

12. Screw for use as part of the system according to any one of claims 1-10.

13. The tool of claim 11, wherein the upper engagement section (16) and the lower engagement section (17) are connected via a surface (18) extending from the lower engagement section (17) to the upper engagement section (16), and wherein the lower engagement section (17) is tapered downwardly.

14. The tool of claim 13, wherein the second recess (11) comprises a circular cross section and the lower engagement section (17) comprises a circular cross section.

15. The tool of claims 13 or 14, wherein said surface (18) extends outwardly and upwardly from the lower engagement section (17) to the upper engagement section (16).

16. The tool of any of claims 13 15, wherein the upper engagement section (16) is tapered downwardly at an angle with respect to the axis of the screw to which the tool may engage.

17. The screw of claim 12, comprising a hexalobular shaped first recess (3) extending into the screw head (1) and a second recess (11) centrally located at the bottom of the first recess (3), wherein the second recess (11) comprises slightly inclined walls (12), so that a bottom (13) of the second recess (11) has a diameter slightly smaller than that of an upper part (14) of the second recess (11).

## Patentansprüche

1. System zum antriebsmäßigen Bewegen einer Schraube, wobei das System eine Schraube und ein entsprechendes Werkzeug aufweist, wobei der Schraubenkopf einen Innensechsrund-Schlitz (2) in der oberen Oberfläche des Schraubenkopfes aufweist und eine obere periphere Wand (9) mit einer in der Draufsicht Innensechsrund-Form sich nach unten in den Schraubenkopf hinein erstreckt, wobei die obere periphere Wand (9) parallel oder nahezu parallel zu der Achse der Schraube verläuft, eine geneigte Übergangsfläche (15) sich in bezug auf den unteren Rand der oberen periphere Wand (9) nach unten und nach innen erstreckt, und eine verjüngte Vertiefung (11) sich von dem unteren Rand der geneigten Übergangsfläche (15) nach unten erstreckt, wobei die Abmessungen des Schraubenkopfes derart sind, daß dann, wenn an dem Schraubenkopf ein Werkzeug (6) angreift, das einen oberen Eingriffsbereich (16) und einen unteren Eingriffsbereich (17) aufweist, wobei der obere Eingriffsbereich (16) derart ausgebildet ist, daß er in eine in dem Innensechsrund-Schlitz (2) ausgebildete Vertiefung (3) paßt, und wenn der untere Eingriffsbereich (17) nach unten verjüngt ausgebildet ist, ein "Haftsitz" zwischen der Oberfläche der verjüngten Vertiefung (11) und der äußeren Oberfläche des unteren verjüngten Eingriffsbereichs (17) vorliegt und kein Eingriff mit der geneigten Übergangsfläche (15) stattfindet.

2. System nach Anspruch 1,
wobei der obere Eingriffsbereich (16) einen gleichmäßigen Durchmesser aufweist.

3. System nach Anspruch 1,
wobei der obere Eingriffsbereich (16) in bezug auf die Achse der Schraube, an der das Werkzeug angreifen soll, unter einem Winkel nach unten verjüngt ausgebildet ist.

4. System nach Anspruch 3,
wobei der obere Eingriffsbereich (16) unter einem Winkel von 0,1° bis 2,5° verjüngt ausgebildet ist.

5. System nach Anspruch 3 oder 4,
wobei der obere Eingriffsbereich (16) unter einem Winkel zwischen 0,5° und 1,5° verjüngt ausgebildet ist.

6. System nach einem der vorhergehenden Ansprüche,
wobei im unteren Eingriffsbereich (17) des Werkzeugs das Werkzeug unter dem gleichen Winkel wie die Vertiefung (11) in der Schraube verjüngt ausgebildet ist, so daß das Werkzeug eine "Haftsitz"-Preßverbindung mit der Schraube herstellen kann.

7. System nach Anspruch 6,
wobei eine Übergangszone (19) zwischen dem oberen und dem unteren Eingriffsbereich des Werkzeugs vorhanden ist, in der das Werkzeug nicht mit der Schraube in Kontakt tritt.

8. System nach Anspruch 6 oder 7,
wobei in dem oberen Eingriffsbereich (16) des Werkzeugs das Werkzeug (6) unter einem geringfügig spitzeren Winkel verjüngt ist als eine periphere Wand (9) der Schraube.

9. System nach einem der vorhergehenden Ansprüche,
wobei die verjüngte Vertiefung (11) in der Draufsicht kreisförmig ist.

10. System nach Anspruch 9,
wobei mit dem oberen Eingriffsbereich (9) ein engerer Sitz an dem oberen Rand der oberen peripheren Wand und ein lockerer Sitz an dem unteren Rand der oberen peripheren Wand (9) vorhanden ist.

11. Werkzeug zur Verwendung als Teil des Systems
nach einem der vorhergehenden Ansprüche.

12. Schraube zur Verwendung als Teil des Systems
nach einem der Ansprüche 1 bis 10.

13. Werkzeug nach Anspruch 11,
wobei der obere Eingriffsbereich (16) und der untere Eingriffsbereich (17) über eine Fläche (18) verbunden sind, die sich von dem unteren Eingriffsbereich (17) zu dem oberen Eingriffsbereich (16) erstreckt, und wobei der untere Eingriffsbereich (17) nach unten verjüngt ausgebildet ist.

14. Werkzeug nach Anspruch 13,
wobei die zweite Vertiefung (11) einen kreisförmigen Querschnitt aufweist und der untere Eingriffsbereich (17) einen kreisförmigen Querschnitt aufweist.

15. Werkzeug nach Anspruch 13 oder 14,
wobei sich die Fläche (18) von dem unteren Eingriffsbereich (17) nach außen und nach oben zu dem oberen Eingriffsbereich (16) erstreckt.

16. Werkzeug nach einem der Ansprüche 13 bis 15,
wobei der obere Eingriffsbereich (16) in bezug auf die Achse der Schraube, an der das Werkzeug angreifen kann, unter einem Winkel nach unten verjüngt ausgebildet ist.

17. Schraube nach Anspruch 12,
Innensechsrund-Form mit einer ersten Vertiefung (3), die sich in den Schraubenkopf (1) hinein erstreckt, und mit einer zweiten Vertiefung (11), die sich zentral an dem Boden der ersten Vertiefung (3) befindet, wobei die zweite Vertiefung (11) geringfügig geneigte Wände (12) aufweist, so daß ein Boden (13) der zweiten Vertiefung (11) einen geringfügig kleineren Durchmesser aufweist als ein oberer Teil (14) der zweiten Vertiefung (11).

## Revendications

1. Système permettant de visser une vis, comprenant une vis et un outil correspondant, la tête de vis présentant une fente à six lobes (2) dans la surface supérieure de la tête de vis, une paroi périphérique supérieure (9) qui présente une forme plane à six lobes qui s'étend vers le bas dans la tête de vis, la paroi périphérique supérieure (9) étant parallèle ou presque parallèle à l'axe de la vis, une surface de transition en pente (15) qui s'étend vers le bas et vers l'intérieur par rapport au bord inférieur de la paroi périphérique supérieure (9), et un évidement aminci (11) qui s'étend vers le bas à partir du bord inférieur de la surface de transition en pente (15), dans lequel les dimensions de la tête de vis sont telles, lorsque la tête de vis est mise en prise par un outil (6) qui présente des sections de mise en prise supérieure (16) et inférieure (17), et dans lequel la section de mise en prise supérieure (16) est conçue de façon à s'ajuster à l'intérieur d'un évidement (3) formé dans la fente à six lobes (2) et la section de mise en prise inférieure (17) est amincie vers le bas, qu'il y ait un « ajustement résistant » entre la surface de l'évidement aminci (11) et la surface extérieure de la section de mise en prise amincie inférieure (17), et qu'il n'y ait pas de mise en prise avec la surface de transition en pente (15).

2. Système selon la revendication 1, dans lequel la section de mise en prise supérieure (16) présente un diamètre uniforme.

3. Système selon la revendication 1, dans lequel la section de mise en prise supérieure (16) est amincie vers le bas sous un angle par rapport à l'axe de la vis selon lequel l'outil doit venir en prise.

4. Système selon la revendication 3, dans lequel la section de mise en prise supérieure (16) est amincie sous un angle compris entre 0,1 degré et 2,5 degrés.

5. Système selon la revendication 3 ou la revendication 4, dans lequel la section de mise en prise supérieure (16) est amincie sous un angle compris entre 0,5 degré et 1,5 degrés.

6. Système selon l'une quelconque des revendications précédentes, dans lequel, dans la section de mise en prise inférieure (17) de l'outil, l'outil est aminci sous le même angle que l'évidement (11) dans la vis, de telle sorte que l'outil puisse réaliser une connexion par pression avec "ajustement résistant" avec la vis.

7. Système selon la revendication 6, dans lequel il y a une zone de transition (19) entre les sections de mise en prise supérieure et inférieure de l'outil dans laquelle l'outil n'établit aucun contact avec la vis.

8. Système selon la revendication 6 ou la revendication 7, dans lequel dans la section de mise en prise supérieure (16) de l'outil, l'outil (6) est aminci sous un angle légèrement plus aigu qu'une paroi périphérique (9) de la vis.

9. Système selon l'une quelconque des revendications précédentes, dans lequel l'évidement aminci (11) présente une forme plane circulaire.

10. Système selon la revendication 9, dans lequel il y a un ajustement plus serré au niveau du bord supérieur de la paroi périphérique supérieure et un ajustement plus lâche au niveau du bord inférieur de la paroi périphérique supérieure (9) avec la section de mise en prise supérieure (16).

11. Outil destiné à être utilisé en tant qu'élément du système selon l'une quelconque des revendications précédentes.

12. Vis destinée à être utilisée en tant qu'élément du système selon l'une quelconque des revendications 1 à 10.

13. Outil selon la revendication 11, dans lequel la section de mise en prise supérieure (16) et la section de mise en prise inférieure (17) sont connectées par l'intermédiaire d'une surface (18) qui s'étend à partir de la section de mise en prise inférieure (17) vers la section de mise en prise supérieure (16), et dans lequel la section de mise en prise inférieure (17) est amincie vers le bas.

14. Outil selon la revendication 13, dans lequel le second évidement (11) comprend une section transversale circulaire et la section de mise en prise inférieure (17) comprend une section transversale circulaire.

15. Outil selon la revendication 13 ou la revendication 14, dans lequel ladite surface (18) s'étend vers l'extérieur et vers le haut à partir de la section de mise en prise inférieure (17) vers la section de mise en prise supérieure (16).

16. Système selon l'une quelconque des revendications 13 à 15, dans lequel la section de mise en prise supérieure (16) est amincie vers le bas sous un angle par rapport à l'axe de la vis selon lequel l'outil peut venir en prise.

17. Vis selon la revendication 12, comprenant un premier évidement qui présente une forme à six lobes (3) qui s'étend dans la tête de vis (1) et un second évidement (11) situé de manière centrale au niveau du fond du premier évidement (3), dans lequel le second évidement (11) comprend des parois légèrement inclinées (12), de telle sorte que le fond (13) du second évidement (11) présente un diamètre légèrement plus petit que celui d'une partie supérieure (14) du second évidement (11).
